# EUROPÄISCHE PATENTSCHRIFT

(11) **EP 0 927 626 B1**
(45) Veröffentlichungstag und Bekanntmachung des Hinweises auf die Patenterteilung: **03.04.2002**
(21) Anmeldenummer: 98122590.7
(22) Anmeldetag: 04.12.1998
(51) Int. Cl.: B29C 59/16

(54) **Behandlung von Kunststoffoberflächen**
Surface treatment of plastics
Traitement de surfaces de matières plastiques

(30) Priorität: 29.12.1997 DE 19758020
(43) Veröffentlichungstag der Anmeldung: 07.07.1999
(73) Patentinhaber: Volkswagen Aktiengesellschaft, 38436 Wolfsburg (DE)
(72) Erfinder: Broistedt, Karl-Heinz, 38464 Klein Twülpstedt (DE); Dirks, Günther, 38116 Braunschweig (DE)
(74) Vertreter: Schneider, Henry, Dipl.-Ing.

(56) Entgegenhaltungen:
- EP-A- 0 346 485
- EP-A- 0 381 525
- EP-A- 0 589 351
- EP-A- 0 711 627
- WO-A-86/07568
- WO-A-96/17737
- US-A- 5 320 789

## Beschreibung

Die Erfindung betrifft eine Vorrichtung zur Behandlung von Kunststoffoberflächen, insbesondere von Fahrzeug-Kunststoffinnenteilen, mit mindestens einer Bestrahlungseinrichtung zur Erzeugung von monochromatischen elektromagnetischen Wellen im UV-Bereich zur Bestrahlung der Oberflächen und mindestens einer Bewegungseinrichtung zur Erzeugung einer Relativbewegung zwischen den zu behandelnden Oberflächen und der Bestrahlungseinrichtung.

Des weiteren betrifft die Erfindung ein Verfahren zur Behandlung von Kunststoffoberflächen, insbesondere von Fahrzeug-Kunststoffinnenteilen, wobei mit mindestens einer Bestrahlungseinrichtung einer Behandlungsvorrichtung monochromatische elektromagnetische Wellen im UV-Bereich erzeugt und mittels der Bestrahlungseinrichtung die Oberflächen bestrahlt werden, während gleichzeitig eine Relativbewegung mittels einer Bewegungseinrichtung der Behandlungsvorrichtung zwischen den Oberflächen und der Bestrahlungseinrichtung ausgeführt wird.

Weiterhin betrifft die Erfindung eine Verwendung der erfindungsgemäßen Vorrichtung zur Durchführung des erfindungsgemäßen Verfahrens.

Ferner betrifft die Erfindung Bauteile, insbesondere Fahrzeug-Kunststoffinnenteile, und Fahrzeuge, insbesondere Personenkraftwagen.

Schließlich betrifft die Erfindung ein Verfahren zur Herstellung von Fahrzeugen, insbesondere Personenkraftwagen, oder von Karosserien, insbesondere PKW-Karosserien, durch Zusammensetzen von Bauteilen.

In den letzten Jahren sind immer mehr umweltbelastende Kunststoffe durch weniger schädliche Kunststoffe ersetzt worden, wobei jedoch häufig bestimmte Werkstoffeigenschaften zu erhalten sind, um einen adäquaten Ersatz sicherzustellen. Bei Kunststoffen ist die Oberflächenenergie eine wichtige Größe, stellt sie doch ein Maß für die Adhäsion und damit auch der Oberflächenbeschichtbarkeit dar.

In erster Linie wird durch Modifizierung der Oberflächen die Oberflächenenergie des Polymers erhöht, um so die Möglichkeit bzw. die Erhöhung der Haftfähigkeit sicherzustellen. Somit werden schlecht haftende Kunststoffe wie beispielsweise Polypropylen beschichtungsfähig bzw. deren Beschichtungen werden abriebfest.

Dies wird in der Regel durch Erhöhen der Polarität der chemischen Bindungen an der Oberfläche erreicht. Dies geschieht beim Fluorieren durch Einbringen von elektronegativem Fluor, beim Plasmatisieren oder Beflämmen dagegen durch Einbringen von Sauerstoff und teilweise auch Stickstoff.

Wesentliche Voraussetzung für die chemische Reaktion ist die Zufuhr von Energie in die Kunststoffoberfläche. Dies geschieht beispielsweise beim Beflämmen durch thermische Erwärmung mittels einer Brennerflamme. Nachteile dieses Verfahrens sind zum einen die mögliche Überhitzung des Kunststoffteils, insbesondere an den Kanten, sowie der Verbrauch des zur Reaktion benötigten Sauerstoffs bereits in der Brennerflamme.

Wesentlicher Nachteil des Plasmatisierens und des Photo-CVD-Verfahrens ist die aufwendige Vakuumtechnik, die einen wirtschaftlichen Einsatz bei großen Bauteilen, beispielsweise bei instrumententafelträgem, und hohen Stückzahlen ausschließt.

Weitere Verfahren, wie zum Beispiel das Corona-Behandeln, weisen oft eine unsichere Prozeßführung oder eine hohe Ausschußquote auf.

Aus der EP 0 381 525 A2 ist ein Verfahren zum Erzeugen von Mikro-Kapillaren in Kunststoffoberflächen bekannt, bei dem eine Bestrahlung mit elektromagnetischen Wellen im UV-Bereich erfolgt. Die zu behandelnde Oberfläche ist relativ zur Bestrahlungseinrichtung bewegbar. Aus der EP 0 589 351 A1 ist bekannt, Kunststoffoberflächen mit elektromagnetischen Wellen im UV-Bereich zu bestrahlen, wobei die Behandlung im Vakuum oder in einer inertgas-Atmosphäre erfolgt. Aus der WO 86/07568 ist eine Vorrichtung zur Reinigung von Oberflächen mittels Laserbestrahlung bekannt.

Der Erfindung liegt die Aufgabe zugrunde, eine Vorrichtung und ein Verfahren der gattungsgemäßen Art anzugeben, mittels denen Kunststoffe mittels kontinuierlichen UV-Strahlen oberflächenbehandelt werden können, wobei eine thermische Schädigung der Kunststoffe vermieden werden soll und eine hohe Prozeßsicherheit gewährleistet werden soll.

Aus dem vorgenannten ergibt sich das Problem, mit Hilfe einer neuen Vorrichtung, eines neuen Verfahrens und einer entsprechenden Verwendung der Vorrichtung eine kostengünstige und einfach zu bewerkstelligende Behandlung von Kunststoffoberflächen bereitzustellen und die Nachteile aus dem Stand der Technik zumindest teilweise zu vermeiden.

Diese Aufgabe wird erfindungsgemäß durch eine Vorrichtung nach Anspruch 1, ein Verfahren nach Anspruch 5, ein Bauteil nach Anspruch 10, ein Fahrzeug nach Anspruch 11 und ein Verfahren nach Anspruch 12 gelöst.

Die Bestrahlungseinrichtung der erfindungsgemäßen Vorrichtung erzeugt insbesondere monochromatische elektromagnetische Wellen im UV-Bereich, um den Oberflächen eine definierte Energie zuzuführen und somit eine Grundlage für eine gezielte Aktivierung sicherzustellen. Die Wellenlänge der Strahlung liegt üblicherweise überwiegend im Bereich von 150 bis 350 nm, wobei vorteilhaft eine UV-Excimer-Strahlungsquelle zum Einsatz kommt. Optimale Ergebnisse sind durch Anpassung der Wellenlänge auf die jeweilige Kunststoffsorte erreichbar, zumal sich das zu behandelnde Bauteil nur geringfügig erwärmt.

Die Bewegungseinrichtung der erfindungsgemäßen Vorrichtung erzeugt bei Durchführung des erfindungsgemäßen Verfahrens eine Relativbewegung zwischen den zu behandelnden Oberflächen und der Bestrahlungseinrichtung zur räumlich definierten Bewegung und somit zur gesteuerten Behandlung. Die Bestrahlungseinrichtung kann unter anderem ein UV-Excimer-Laser sein. Beispielsweise kann die Bestrahlungseinrichtung über alle zu behandelnden Stellen des Bauteils mit konstanter Geschwindigkeit unter möglichst konstantem Abstand geführt werden. Dadurch wird erreicht, daß alle später zu lackierenden, zu beklebenden oder zu beschichtenden Oberflächen eine annähernd vergleichbare Oberflächenhaftfähigkeit erhalten. Die Geschwindigkeit der Bewegungseinrichtung, beispielsweise ein Roboter, und die Breite des UV-Strahls bestimmen die Bestrahlungsdauer, während der Abstand der Bestrahlungseinrichtung die Strahlungsintensität beeinflußt.

Von besonderem Vorteil ist es, wenn die erfindungsgemäße Vorrichtung mindestens eine Spüleinrichtung aufweist zum Spülen mit mindestens einem gasförmigen Medium der im wesentlichen zwischen den Oberflächen und der Bestrahlungseinrichtung vorhandenen Gasvolumina, um die nur bei bestimmten Wellenlängen störende Absorption der von der Bestrahlungseinrichtung ausgestrahlten Photonen durch die Umgebungsluft zu verhindern bzw. zu vermindern. Das Spülmedium kann beispielsweise Stickstoff sein.

Beim erfindungsgemäßen Verfahren wird zu diesem Zweck die Luft in den oben genannten Gasvolumina durch das entsprechende Spülmedium verdrängt. Durch die Relativbewegung ist dieser Effekt sowohl örtlich wie auch zeitlich begrenzt, so daß nach dem Vorbeifahren der Bestrahlungseinrichtung und der Spüleinrichtung der zur chemischen Reaktion in der Oberfläche benötigte Sauerstoff wieder in ausreichender Konzentration zur Verfügung steht. Die Vorrichtung bzw. das Verfahren können folglich unter Umgebungsdruck, -atmosphäre und Raumtemperatur betrieben bzw. durchgeführt werden.

Die Vorteile der Vorrichtung und des Verfahrens zur Behandlung von Kunststoffoberflächen sind hauptsächlich folgende:
a.) es entfällt eine apparativ aufwendige Bereitstellung eines Vakuums und somit ein entsprechend zeitraubendes chargenweises Ausschleusen; das Verfahren kann on-line betrieben werden;
b.) die Erwärmung der zu behandelnden Bauteile ist bei gegebener Anpassung der Wellenlängen an die Kunststoffsorten gering;
c.) es ist keine, verfahrensmäßig oft kritische, offene Flamme notwendig, so daß unter anderem auch aus diesem Grund eine hohe Prozeßsicherheit vorliegt.

Vorteilhafterweise sendet die Bestrahlungseinrichtung bei Durchführung des Verfahrens elektromagnetische Wellen inkohärenter Natur aus, um Interferenzerscheinungen auf der Oberfläche eines Bauteils zu vermeiden.

Weiterhin ist es von Vorteil, wenn die Bestrahlungseinrichtung eine kontinuierliche UV-Strahlungsquelle ist, da auf diese Art und Weise sichergestellt ist, daß das Bauteil bei der Relativbewegung kontinuierlich bestrahlt wird.

Inkohärenz und kontinuierliches Aussenden gewährleisten eine besonders gleichmäßige Bestrahlung der zu behandelnden Oberflächen; typischerweise stellen sogenannte W-Excimer-Lampen beides sicher.

Die Verwendung einer erfindungsgemäßen Vorrichtung zur Durchführung nach einem erfindungsgemäßen Verfahren weist die oben genannten Vorteile auf; dies schlägt sich auch in der besseren Haftfähigkeit der Kunstatoffoberflächen und damit auch in der Produktqualität der entsprechenden beispielsweise beschichteten Bauteile und Fahrzeuge einschließlich des damit verbundenen Herstellungsverfahrens von Fahrzeugen nieder.

Das nachfolgende Beispiel dient zur Erläuterung der Erfindung.

Es zeigt:

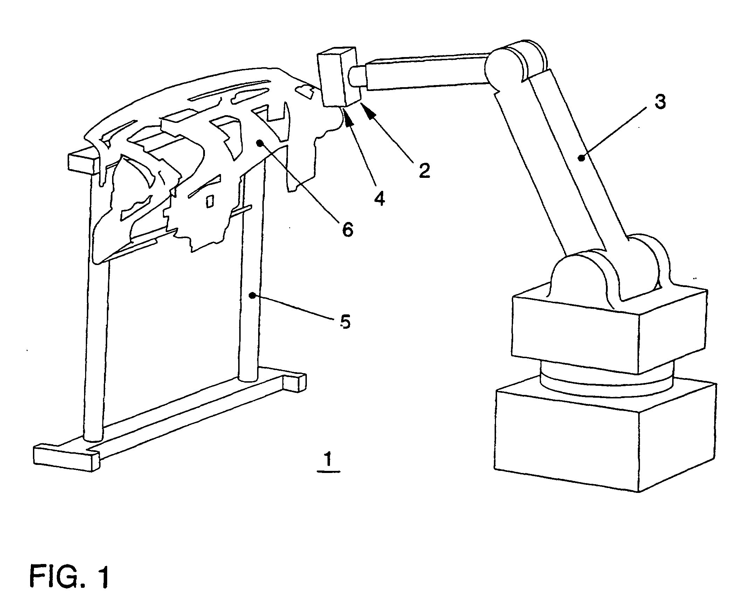

- Figur 1: eine perspektivische Darstellung einer Ausgestaltung der erfindungsgemäßen Vorrichtung.

Figur 1 zeigt eine Ausgestaltung der erfindungsgemäßen Vorrichtung (1). Diese weist eine als Roboter mit Arm ausgestaltete Bewegungseinrichtung (3) auf, die am Ende des Arms sowohl eine als UV-Excimer-Lampe ausgestaltete Bestrahlungseinrichtung (2) wie auch eine eine Düse aufweisende Spüleinrichtung (4) trägt. Mit Hilfe einer Halteeinrichtung (5) wird ein zu behandelndes Kunststoff-Bauteil in Form eines Instrumententafelträgers (6) in eine bestimmte Position fixiert.

Entsprechend den obigen Ausführungen kann das Bauteil (6) verfahrensgemäß behandelt werden.

## Patentansprüche

1. Vorrichtung (1) zur Behandlung von Kunststoffoberflächen mit mindestens einer Bestrahlungseinrichtung (2) zur Erzeugung von elektromagnetischen Wellen im UV-Bereich zur Bestrahlung der Oberflächen und mindestens einer Bewegungseinrichtung (3) zur Erzeugung einer Relativbewegung zwischen den zu behandelnden Oberflächen und der Bestrahlungseinrichtung (2), **dadurch gekennzeichnet, daß** die Bestrahlungseinrichtung (2) beabstandet zu der zu behandelnden Oberfläche angeordnet ist, und die Vorrichtung (1) mindestens eine Spüleinrichtung (4) zum örtlich und Zeitlich begrenzten Spülen mit mindestens einem gasförmigen Medium der im wesentlichen zwischen den Oberflächen und der Bestrahlungseinrichtung (2) vorhandenen Gasvolumina umfaßt.

2. Vorrichtung (1) nach Anspruch 1, **dadurch gekennzeichnet, daß** die Bestrahlungseinrichtung (2) elektromagnetische Wellen inkohärenter Natur aussendet.

3. Vorrichtung (1) nach Anspruch 1 oder 2, **dadurch gekennzeichnet, daß** die Bestrahlungseinrichtung (2) eine kontinuierliche UV-Strahlungsquelle ist.

4. Vorrichtung (1) nach einem der vorhergehenden Ansprüche, **dadurch gekennzeichnet, daß** die zu behandelnden Oberflächen Kunststoffoberflächen von Fahrzeug-Kunststoffinnenteilen sind.

5. Verfahren zur Behandlung von Kunststoffoberflächen, wobei mit mindestens einer Bestrahlungseinrichtung (2) einer Behandlungsvorrichtung (1) elektromagnetische Wellen im UV-Bereich erzeugt und mittels der Bestrahlungseinrichtung (2) die Oberflächen bestrahlt werden, während gleichzeitig eine Relativbewegung mittels einer Bewegungseinrichtung (3) der Behandlungsvorrichtung (1) zwischen den Oberflächen und der Bestrahlungseinheit (2) ausgeführt wird, **dadurch gekennzeichnet, daß** mittels mindestens einer Spüleinrichtung (4) der Vorrichtung (1) mit mindestens einem gasförmigen Medium die im wesentlichen zwischen den Oberflächen und der Bestrahlungseinrichtung (2) vorhandenen Gasvolumina örtlich und Zeitlich begrenzt gespult werden.

6. Verfahren nach Anspruch 5, **dadurch gekennzeichnet, daß** die Bestrahlungseinrichtung (2) elektromagnetische Wellen inkohärenter Naturaussendet.

7. Verfahren nach Anspruch 5 oder 6, **dadurch gekennzeichnet, daß** die Bestrahlungseinrichtung (2) kontinuierlich UV-Strahlung aussendet.

8. Verfahren nach einem der Ansprüche 5 bis 7, **dadurch gekennzeichnet, daß** die bestrahlte Kunststoffoberfläche beschichtet wird.

9. Verfahren nach Anspruch 8, **dadurch gekennzeichnet, daß** die bestrahlte Kunststoffoberfläche mit einem Lack oder Kleber beschichtet wird.

10. Bauteil, insbesondere Fahrzeug-Kunststoffinnenteil, **dadurch gekennzeichnet; daß** dieses zumindest teilweise nach einem Verfahren nach einem der Ansprüche 5 bis 9 behandelt worden ist.

11. Fahrzeug, **dadurch gekennzeichnet, daß** dieses mindestens ein Bauteil nach Anspruch 10 aufweist.

12. Verfahren zur Herstellung von Fahrzeugen oder von Karosserien durch Zusammensetzen von Bauteilen, **dadurch gekennzeichnet, daß** mindestens ein Bauteil nach Anspruch 10 verwendet wird.

## Claims

1. A device (1) for treating surfaces of plastics material having at least one radiation device (2) for producing electromagnetic waves in the UV range for radiating the surfaces and having at least one movement device (3) for producing a relative movement between the surfaces to be treated and the radiation device (2), **characterized in that** the radiation device (2) is arranged spaced from the surface to be treated, and the device (1) comprises at least one scouring device (4) for scouring - with at least one gaseous medium and in a manner limited in space and time - the gas volumes present substantially between the surfaces and the radiation device (2).

2. A device (1) according to Claim 1, **characterized in that** the radiation device (2) emits electromagnetic waves of incoherent nature.

3. A device (1) according to Claim 1 or 2, **characterized in that** the radiation device (2) is a continuous UV-radiation source.

4. A device (1) according to one of the preceding Claims, **characterized in that** the surfaces to be treated are plastics-material surfaces of plastics-material inner parts of a vehicle.

5. A method of treating surfaces of plastics material, in which electromagnetic waves are produced in the UV range by at least one radiation device (2) of a treatment device (1) and the surfaces are radiated by means of the radiation device (2), whilst at the same time a relative movement is produced by means of a movement device (3) of the treatment device (1) between the surfaces and the radiation device (2), **characterized in that** the gas volumes present substantially between the surfaces and the radiation device (2) are scoured - in a manner limited in space and time - with at least one gaseous medium by means of at least one scouring device (4) of the device (1).

6. A method according to Claim 5, **characterized in that** the radiation device (2) emits electromagnetic waves of incoherent nature.

7. A method according to Claim 5 or 6, **characterized in that** the radiation device (2) emits UV radiation continuously.

8. A method according to Claims 5 to 7, **characterized in that** the radiated plastics-material surface is coated.

9. A method according to Claim 8, **characterized in that** the radiated plastics-material surface is coated with a lacquer or adhesive.

10. A component, in particular a plastics-material inner part of a vehicle, **characterized in that** it has been treated at least in part in accordance with a method according to one of Claims 5 to 9.

11. A vehicle, **characterized in that** it comprises at least one component according to Claim 10.

12. A method of producing vehicles or bodies by assembling components, **characterized in that** at least one component according to Claim 10 is used.

## Revendications

1. Dispositif (1) pour le traitement de surfaces en matière synthétique avec au moins un dispositif d'irradiation (2) pour la production d'ondes électromagnétiques dans la gamme des ultraviolets pour l'irradiation des surfaces et au moins un dispositif de mise en mouvement (3) pour la réalisation d'un mouvement relatif entre les surfaces à traiter et le dispositif d'irradiation (2), **caractérisé en ce que** le dispositif d'irradiation (2) est disposé avec un espacement par rapport à la surface à traiter et **en ce que** le dispositif (1) comprend au moins une installation de rinçage (4) pour un rinçage limité localement et dans le temps des volumes de gaz disponibles pour l'essentiel entre les surfaces et le dispositif d'irradiation (2) avec au moins un fluide gazeux.

2. Dispositif (1) selon la revendication 1, **caractérisé en ce que** le dispositif d'irradiation (2) émet des ondes électromagnétiques de nature incohérente.

3. Dispositif (1) selon la revendication 1 ou 2, **caractérisé en ce que** le dispositif d'irradiation (2) est une source continue de rayons ultraviolets.

4. Dispositif (1) selon l'une des revendications précédentes, **caractérisé en ce que** les surfaces à traiter sont des surfaces en matière synthétique de pièces intérieures en matière synthétique pour automobiles.

5. Procédé pour le traitement de surfaces en matière synthétique, des ondes électromagnétiques dans la gamme des ultraviolets étant produites avec au moins un dispositif d'irradiation (2) d'un dispositif de traitement (1) et l'irradiation des surfaces ayant lieu à l'aide du dispositif d'irradiation (2) tandis qu'un mouvement relatif est induit simultanément entre les surfaces et l'unité d'irradiation (2) à l'aide d'un dispositif de mise en mouvement (3) du dispositif de traitement (1), **caractérise en ce qu'**à l'aide d'au moins une installation de rinçage (4) du dispositif (1), les volumes de gaz disponibles pour l'essentiel entre les surfaces et le dispositif d'irradiation (2) font l'objet d'un rinçage limité localement et dans le temps avec au moins un fluide gazeux.

6. Procédé selon la revendication 5, **caractérisé en ce que** le dispositif d'irradiation (2) émet des ondes électromagnétiques de nature incohérente.

7. Procédé selon la revendication 5 ou 6, **caractérisé en ce que** le dispositif d'irradiation (2) émet un rayonnement ultraviolet continu.

8. Procédé selon l'une des revendications 5 à 7, **caractérisé en ce qu'**une couche de revêtement est appliquée sur la surface en matière synthétique soumise au rayonnement.

9. Procédé selon la revendication 8, **caractérisé en ce qu'**une couche de vernis ou de colle est appliquée sur la surface en matière synthétique soumise au rayonnement.

10. Composant, en particulier pièce intérieure en matière synthétique de voiture automobile, **caractérisé en ce qu'**il a été au moins partiellement traité par un procédé selon l'une des revendication 5 à 9.

11. Véhicule automobile, **caractérisé en ce qu'**il comprend au moins un composant selon la revendication 10.

12. Procédé pour la réalisation de véhicules automobiles et de carrosseries par assemblage de composants, **caractérisé en ce qu'**au moins un composant selon la revendication 10 est utilisé.
